Europäisches Patentamt

European Patent Office

Office européen des brevets

(11) Veröffentlichungsnummer: **0 140 825**
**A2**

(12) # EUROPÄISCHE PATENTANMELDUNG

(21) Anmeldenummer: 84730105.8

(22) Anmeldetag: 03.10.84

(51) Int. Cl.⁴: **B 60 C 27/06**

(30) Priorität: 04.10.83 CH 5391/83

(43) Veröffentlichungstag der Anmeldung: 08.05.85
Patentblatt 85/19

(84) Benannte Vertragsstaaten: **AT DE GB IT**

(71) Anmelder: **RUD-Kettenfabrik Rieger & Dietz GmbH u.
Co., Friedensinsel, D-7080 Aalen 1 (DE)**

(72) Erfinder: **Holzwarth, Dietmar, Vogelhofstrasse 51,
D-7070 Schwäbisch Gmünd (DE)**
Erfinder: **Kaiser, Helmut, Dipl.-Ing. (FH), Geierweg 38,
D-7080 Aalen-Hofherrnweiler (DE)**

(74) Vertreter: **Böning, Manfred, Dr. Ing. et al, Patentanwälte
Dipl.-Ing. Dieter Jander Dr. Ing. Manfred Böning
Kurfürstendamm 66, D-1000 Berlin 15 (DE)**

(54) **Reifenkette.**

(57) Bei einer Reifenkette mit einem im Bereich der äusseren Halterung (5) zu verwahrenden Spannstrang (8) ist die äussere Halterung (5) mit Führungsösen (7) für den Spannstrang (8) versehen, die derart an der äusseren Halterung (5) befestigt sind, dass ihre Ösen bei montierter Reifenkette mit Sicherheit zur Achse (20) des jeweiligen Reifens gerichtet sind.

0140825

- 1 -

<u>Reifenkette</u>

Die Erfindung betrifft eine Reifenkette, insbesondere Gleitschutzkette, mit einer inneren und einer äußeren Halterung für ein durch einen Spannstrang spannbares Laufnetz, bei der der Spannstrang durch das Verwahren erleichternde, an der äußeren Halterung angeordnete, senkrecht zur Seitenfläche des Reifens orientierte drehfest mit der äußeren Halterung verbundene Führungsösen fädelbar ist, wobei die äußere Halterung von einer Seitenkette gebildet wird, mit der das Laufnetz mittels Kettensträngen verbunden ist, die an Anschlußglieder der Seitenkette angreifen, die in der Betriebsstellung parallel zur Seitenfläche des Reifens orientiert sind.

Bekannt ist eine Reifenkette der vorstehenden Art, bei der die Führungsösen - wie die Anschlußglieder für die Kettenstränge des Laufnetzes - an Glieder der äußeren Seitenkette angreifen, die in der Betriebsstellung parallel zur Seitenfläche des Reifens orientiert sind. Dabei ist der Abstand zwischen den Anschlußgliedern und den Führungsösen vergleichsweise groß. Der große, der Länge mehrerer Kettenglieder der Seitenkette entsprechende Abstand der Führungsösen von den Anschlußgliedern hat eine unerwünschte Labilität der Führungsösen zur Folge, die es mit sich bringt, daß der Benutzer der Kette bei deren Montage häufig nicht umhinkommt, die Führungsösen vor dem Einfädeln des Spannstranges in
die richtige Lage zu schwenken. Hierdurch wird
insbesondere beim Auflegen von Schneeketten,
d.h. beim Arbeiten unter den bei Schnee- und
Frostwetter herrschenden ungünstigen Bedingungen,
der Handhabungskomfort der Kette erheblich beeinträchtigt. Als nachteilig erweist sich zudem der
Umstand, daß die Führungsösen der bekannten Kette
von einem Ring gebildet werden, der bei der Montage derart deformiert werden muß, daß ein Teil
von ihm einen U-förmigen Bügel bildet, welcher
die Schenkel des mit ihm verbundenen Kettengliedes umschließt. Abgesehen davon, daß das Umformen
des Ringes schwierig ist, läßt die Festigkeit des
Sitzes des Bügels auf dem ihm zugeordneten Kettenglied zu wünschen übrig.

Der Erfindung liegt die Aufgabe zugrunde, eine
Reifenkette der in Betracht gezogenen Art so zu
verbessern, daß sie sich leichter als bekannte
Ketten handhaben läßt, indem Vorkehrungen dafür
getroffen werden, daß die Führungsösen stets eine
bestimmte, das Einfädeln des Spannstranges ohne
zusätzliche Justierarbeiten ermöglichende Position
einnehmen, wobei auf eine einfache Herstellbarkeit
und einen festen Sitz der Führungsösen Wert gelegt
wird.

Diese Aufgabe wird erfindungsgemäß dadurch gelöst, daß die Führungsösen einen von zwei nebeneinander liegenden Drahtbügeln gebildeten Fußteil
aufweisen, der beide Schenkel eines neben einem
Anschlußglied für Kettenstränge des Laufnetzes angeordneten, in der Betriebsstellung senkrecht zur Reifenfläche orientierten Gliedes umfaßt.

Die erfindungsgemässe Reifenkette bietet den Vorteil, daß ihre Führungsösen beim Montieren der Kette automatisch und sicher in eine günstige Lage überführt werden, die das Verwahren und Spannen der Spannkette erleichtert. Die Anbringung der Führungsösen an der von einer Seitenkette gebildeten äußeren Halterung ist einfach und ihre Kippfestigkeit gegenüber dem sie jeweils tragenden Kettenglied aufgrund der Verwendung zweier letzteres umschliessender Drahtbügel groß.

Die Erfindung wird im folgenden anhand der beigefügten Zeichnung näher erläutert. Es zeigen

Figur 1 die Außenansicht einer auf einen Reifen montierten Gleitschutzkette,

Figur 2 eine bei II in Figur 1 dargestellte Einzelheit der Gleitschutzkette gemäß Figur 1,

Figur 3 die Seitenansicht der in Figur 2 dargestellten Führungsöse für den Spannstrang und

Figur 4 die Rückansicht der Führungsöse gemäß Figur 3.

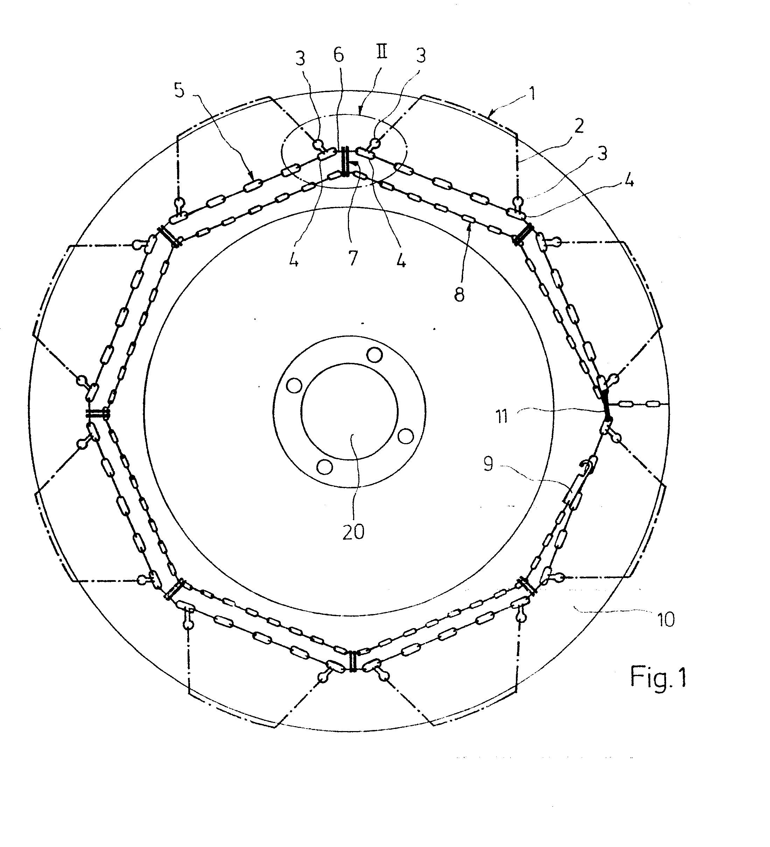

In Figur 1 ist mit 1 allgemein das Laufnetz einer Gleitschutzkette bezeichnet, welches Kettenstränge 2 aufweist, die über sogenannte Seitenhaken 3 mit Anschlußgliedern 4 einer von einer Seitenkette gebildeten äußeren Halterung 5 verbunden sind. Zwischen jeweils zwei Anschlußgliedern 4 für Sei-

tenhaken 3 greift an ein Glied 6 der Seitenkette 5 eine Führungsöse 7 für einen Spannstrang 8 an, der an seinem Ende einen Verwahrungshaken 9 aufweist. Der Spannstrang 8 verbindet die Enden der nicht dargestellten inneren Halterung miteinander und läuft über die Lauffläche des Reifens 10 zu dessen Vorderseite. Dort passiert er ein Verriegelungsorgan 11, das vorzugsweise von einer Scheibe mit einer schlüssellochförmigen Aussparung gebildet wird, in die jeweils ein Glied des als Kette ausgebildeten Spannstranges einhängbar ist und das gleichzeitig ein Sperrelement für den Verwahrungshaken 9 bildet.

Einzelheiten der verwendeten Führungsösen 7 ergeben sich aus den Figuren 3 und 4. Man erkennt, daß die Führungsöse 7 einen von zwei nebeneinander liegenden Drahtbügeln 13 und 14 gebildeten Fußteil 15 besitzt. Dieser Fußteil 15 umschließt beide Schenkel 16,17 des zwischen den Anschlußgliedern 4 angeordneten Gliedes 6.

Die Breite B der Führungsöse 7 ist größer als die Differenz aus der Teilung t und dem zweifachen Wert des Durchmessers d der Glieder des Spannstranges 8. Bei Einhaltung der Bedingung $B > t-2d$ läßt sich der Spannstrang 8 besonders leicht durch die Führungsösen 7 ziehen.

Das zur Befestigung der Führungsöse 7 dienende Glied 6 steht jeweils senkrecht zur Flanke des jeweiligen Reifens und die dem Fußteil der Führungsösen abgewandten Enden bzw. Scheitel sind zur Achse 20 des Reifens gerichtet. Der Spannstrang 8 läßt sich folglich ohne vorherige Ordnungs- bzw. Ausrichtearbeiten durch die Führungs-

- 5 -

ösen fädeln und der Verwahrungshaken in ein
Glied der Seitenkette einhängen.

Durch die gleichmässige Verteilung der Führungsösen über den Umfang der Seitenkette und einen geringen Abstand zwischen dem Angriffspunkt der Anschlußglieder und dem Angriffspunkt der Führungsösen an der Seitenkette erreicht man, daß der kleinste Abstand des Spannstranges 8 von der Achse 20 des Reifens vergleichsweise groß ist. Dies erweist sich insofern als vorteilhaft, als die Felgen und/oder Radabdeckungen immer mehr zu Gestaltungselementen von Kraftfahrzeugen werden und daher zwecks Vermeidung von Beschädigungen nicht von Teilen einer Reifenkette berührt werden sollten.

- 6 -

Patentansprüche

1. Reifenkette, insbesondere Gleitschutzkette, mit einer inneren und einer äußeren Halterung für ein durch einen Spannstrang spannbares Laufnetz (1), bei der der Spannstrang (8) durch das Verwahren erleichternde, an der äußeren Halterung (5) angeordnete, senkrecht zur Seitenfläche des Reifens (10) orientierte, drehfest mit der äußeren Halterung (5) verbundene Führungsösen (7) fädelbar ist, wobei die äussere Halterung (5) von einer Seitenkette gebildet wird, mit der das Laufnetz (1) mittels Kettensträngen (2) verbunden ist, die an Anschlußglieder (4) der Seitenkette angreifen, die in der Betriebsstellung parallel zur Seitenfläche des Reifens (10) orientiert sind, dadurch gekennzeichnet, daß die Führungsösen (7) einen von zwei nebeneinander liegenden Drahtbügeln (13,14) gebildeten Fußteil (15) aufweisen, der beide Schenkel (16,17) eines neben einem Anschlußglied (4) für Kettenstränge (2) des Laufnetzes angeordneten, in der Betriebsstellung senkrecht zur Reifenfläche orientierten Gliedes (6) umfaßt.

2. Reifenkette nach Anspruch 1, dadurch gekennzeichnet, daß die Führungsösen (7) mittig zwischen zwei Anschlußgliedern (4) angeordnet sind.

3. Reifenkette nach Anspruch 1 oder 2, dadurch gekennzeichnet, daß die Führungsösen (7) eine Breite B aufweisen, die größer ist als die Differenz aus der Teilung t und dem doppelten Glieddrahtdurchmesser d der Glieder der Spannkette (8).

4. Reifenkette nach einem der Ansprüche 1 bis 3, dadurch gekennzeichnet, daß die Drahtbügel (13,14) von den Enden einer die Spannkette (8) umgebenden, doppelt liegenden Drahtschlinge gebildet werden.

5. Reifenkette nach einem der Ansprüche 1 bis 4, dadurch gekennzeichnet, daß die Führungsösen (7) und das Verriegelungsorgan (11) für den Spannstrang (8) im wesentlichen gleichmässig über den Umfang der Seitenkette (5) verteilt angeordnet sind.

6. Reifenkette nach Anspruch 5, dadurch gekennzeichnet, daß die zur Befestigung der Führungsösen (7) dienenden Glieder (6) und das Verriegelungsorgan (11) jeweils zwei Anschlußglieder (4) für Kettenstränge (2) des Laufnetzes (1) miteinander verbinden.

7. Reifenkette nach einem der Ansprüche 1 bis 6, dadurch gekennzeichnet, daß die die äußere Halterung bildende Seitenkette (5) durch das im Zugverband der Seitenkette angeordnete Verriegelungsorgan (11) geschlossen ist.

8. Reifenkette nach einem der Ansprüche 1 bis 7, dadurch gekennzeichnet, daß die Anschlußglie-

- 8 -

der (4) über Seitenhaken (3) mit Kettensträngen (2) des Laufnetzes (1) verbunden sind.

0140825

I/I

Fig. 1